# EUROPEAN PATENT SPECIFICATION

(11) **EP 1 052 214 B1**
(45) Date of publication and mention of the grant of the patent: **31.07.2002**
(21) Application number: 99830270.7
(22) Date of filing: 06.05.1999
(51) Int. Cl.: B66F 9/065, B62D 49/02, A01B 59/043

(54) **A vehicle which can be used as a hoister and as an agricultural tractor**
Fahrzeug verwendbar wie Hebevorrichtung und wie Ackerschlepper
Véhicule pouvant être utilisé comme appareil de levage et tracteur agricole

(43) Date of publication of application: 15.11.2000
(73) Proprietor: MERLO S.P.A. INDUSTRIA METALMECCANICA, I-12020 S. Defendente di Cervasca (IT)
(72) Inventor: Merlo, Amilcare, 12020 Frazione San Def.di Cervasca Cuneo (IT); Galfre, Renato, 12020 Frazione San Def.di Cervasca Cuneo (IT)
(74) Representative: Marchitelli, Mauro

(56) References cited:
- EP-A- 0 823 367
- EP-A- 0 945 395
- DE-B- 1 218 199
- GB-A- 769 992
- US-A- 4 892 158

## Description

The present invention relates to a vehicle which can be used as a hoister and as an agricultural tractor.

EP-B-375705 of the same Applicant discloses a hoisting vehicle comprising a load-carrying structure having a median longitudinal axis, a front section and a rear section and provided with two axles, respectively front and rear, each having a pair of wheels; a power unit; a driving and control station; a telescopically extendable and retractable lifting boom placed adjacent to the driving and control station and having one end articulated to the load-carrying structure about a transversal axis; and actuator means for pivoting the lifting boom about said transversal axis between a lowered position, in which the lifting boom extends substantially parallel to the longitudinal axis of the load-carrying structure, and a raised position.

Vehicles of this type with longitudinally arranged lifting boom have shown a great versatility of use. Without modifying the base configuration, the vehicle can be used as an aerial platform for use in building constructions and similar fields, as a fork-lift, and as a hoister for many different applications. In this known vehicle, which up to now has had a great commercial success, the driving and control station is entirely placed on one side of the load-carrying structure with respect of the longitudinal axis thereof, the power unit is arranged on the opposite side of the load-carrying structure with respect to said longitudinal axis, and the lifting boom is arranged centrally between the driving and control station and the power unit, with its rear end articulated to the load-carrying structure about said transversal axis and its front end being arranged for the connection thereto of a fork, a shovel, an aerial platform, a lifting hook, etc. A vehicle of this type is therefore substantially limited to the use as a hoisting machine.

In order to further increase the field of use of a vehicle with a lifting boom of this type, the Applicant has proposed in EP-A- 0 945 395 to equip the hoisting vehicle with a three-point hitch and hoisting means for agricultural implements which can be connected to a rear power take-off, so that the hoisting vehicle can be used also as an agricultural tractor.

The general configuration of the vehicle remains substantially the same with respect to the arrangement known from the above-mentioned European Patent EP-B-375705, with the hoisting boom articulated in the rear portion of the vehicle and arranged centrally between the driving and control station and the power unit. In fact, the three-point hitch and the hoisting means for agricultural implements are carried by a substantially horizontal platform placed on the rear portion of the load-carrying structure of the vehicle and below the transversal articulation axis of the lifting boom.

The vehicle so modified can therefore carry out all the functions of a normal agricultural tractor, and in addition has all the advantages deriving from the provision of a lifting boom with high performances.

A conceptually opposite approach is disclosed in EP-A-823367, in which an agricultural tractor with a substantially traditional configuration is transformed with the addition of a lifting boom for allowing the use of the agricultural tractor also as a hoisting vehicle. The vehicle disclosed in EP-A-823367 comprises a driving and control station arranged in the rear section of the tractor load-carrying structure and centred on the longitudinal axis thereof, immediately above the power unit. The rear end of the lifting boom is placed in front of the driving and control station and the lifting boom extends in front of the driving and control station. A power take-off, three-point hitch and hoisting means for agricultural implements are provided in the rear section of the vehicle.

GB-A-769992 discloses a load lifter attachment for a tractor comprising a fore-and-aft boom structure having a load engaging means at the front, means at the rear for detachable pivotal attachment to the tractor, intermediate means for pivotal attachment of lifting rams in turn pivotally attachable to the tractor and further attachment means for a stand to support the boom structure when detached from the tractor, the stand being set in supporting position after the rear is detached from the tractor with the load-engaging means on the ground and the structure is raised about the front end by the rams and thereafter allowed to rest on the stand by retraction of the rams.

DE1218199 discloses a hoisting device for a tractor comprising a pair of linear actuators articulated to respective levers fixed to a rotatable shaft that controls a pair of lifting levers.

The object of the present invention is to provide a vehicle of the previously-mentioned type, having a hoisting device which can be used for the connection of agricultural implements which is simple, less expensive of the commercially available hoisting devices and which is particularly adapted to be used on a hoisting vehicle with a telescopic boom articulated to the rear section of the frame.

In accordance with the present invention, this object is achieved by a vehicle having the features forming the subject of the claims.

Further characteristics and advantages of the vehicle according to the present invention will become clear in the course of the detailed description which follows, given purely by way of non-limiting example, with reference to the attached drawings, in which:
- figure 1 is a perspective view of a vehicle according to the present invention,
- figure 2 is a perspective view in a greater scale of the rear portion of the vehicle shown in figure 1,
- figure 3 is a schematic cross-section taken along the line III-III of figure 2, and
- figure 4 is a view taken along the arrow IV of figure 2, showing a variant of the hoisting device.

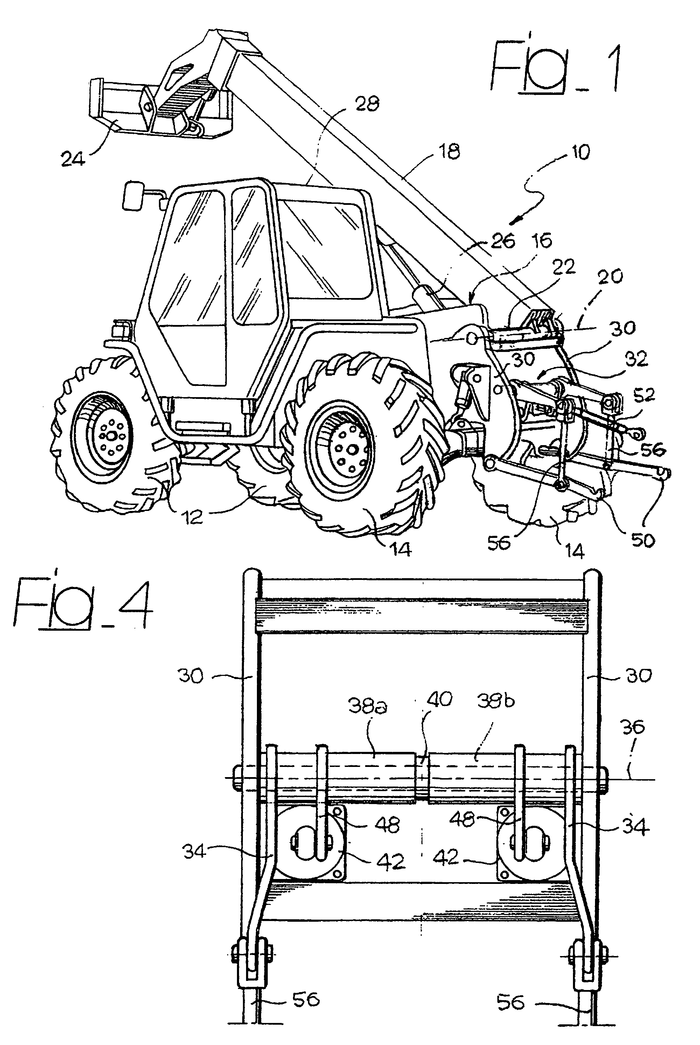

With reference to figure 1, the numeral reference 10 indicates a vehicle according to the present invention which can be used as a hoister and as an agricultural tractor. The vehicle 10 has a pair of front wheels 12 and a pair of rear wheels 14 which can all be both driving a steering wheels.

The vehicle 10 has a load-carrying structure 16 formed by stout bent and welded metal sheets, which carries a lifting boom 18 having the shape of a sturdy box-shaped beam with a rectangular cross-section.

Preferably, the boom 18 is telescopically extendable and retractable and has an end articulated to the rear section of the load-carrying structure 16 about a transversal horizontal axis 20, formed by a pin 22. The boom 18 carries at its free end a base 24 serving for fixing thereto an implement (not shown) which can be a fork, a shovel, an aerial platform, etc. A hydraulic cylinder 26 is provided, in a way generally known, for controlling the pivoting movement of the boom 18 about the transversal axis 22 between lowered and raised positions.

In its lowered position, the boom 18 extends substantially along the median longitudinal axis of the vehicle and its free end projects beyond the front end of the vehicle. On one side of the longitudinal boom 18 a driving and control cab 28 is arranged, housing a seat (not shown) for the operator as well as all mechanical, electrical and hydraulic systems and devices for driving the vehicle and for operating the boom 18 and all the accessory devices of which the vehicle 10 is equipped. In a way per se known, the vehicle 10 has an internal combustion engine (not shown) which is arranged on the opposite side of the boom 18 with respect to the control cab 28 and is at least partially housed between the two wheels 12, 14 of that side of the vehicle.

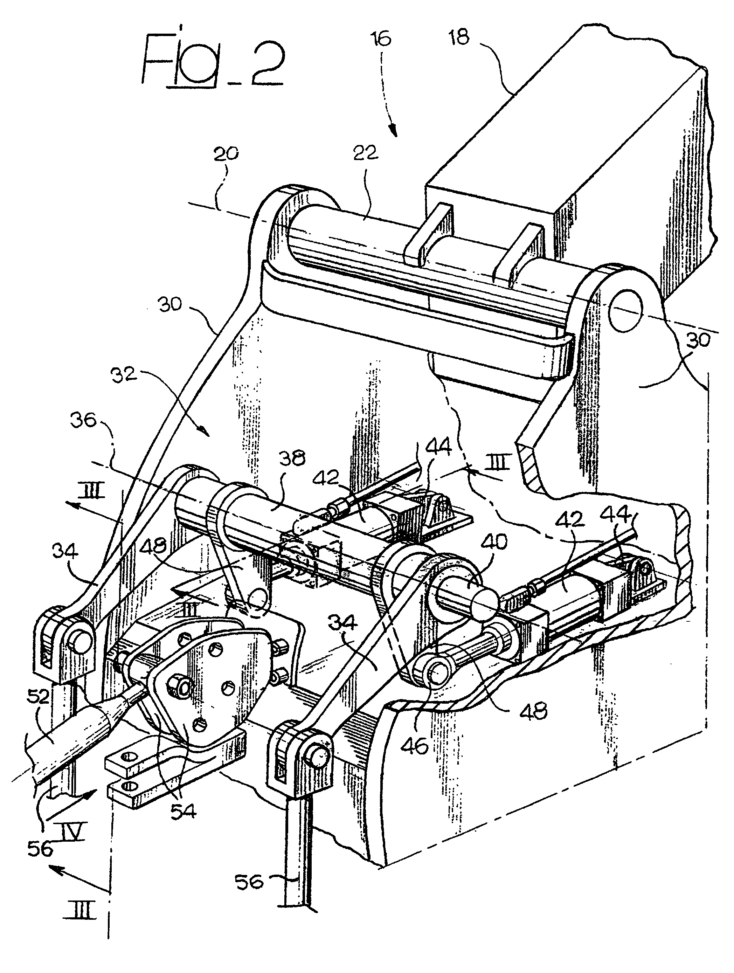

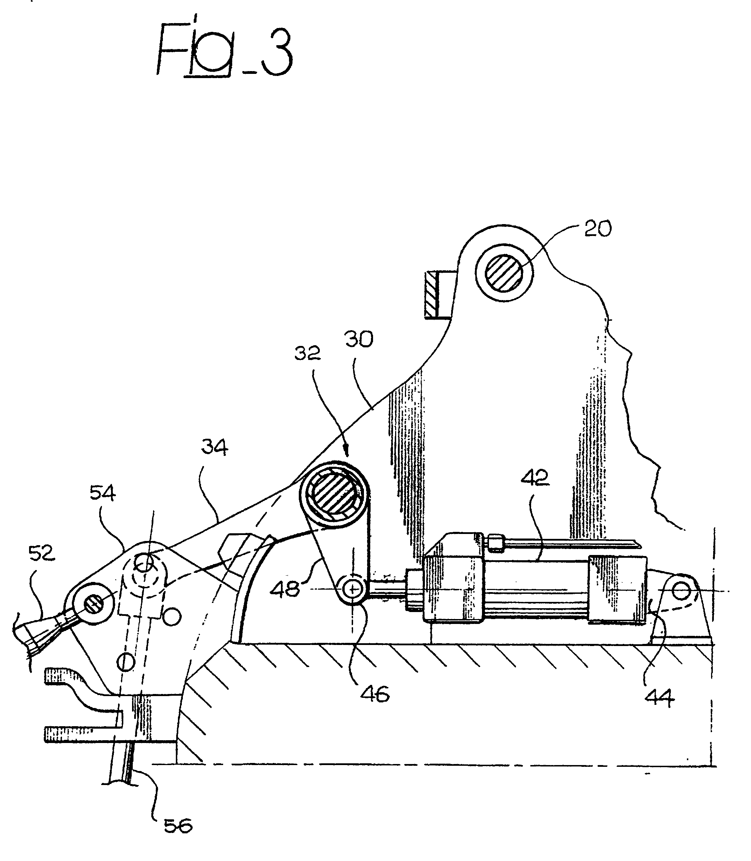

Referring now to figures 2 and 3, the rear section of the load-carrying structure 16 has a pair of sturdy vertical walls 30 spaced apart from each other, which carry the articulation pin 22 of the boom 18. A hoisting device 32 is arranged between the walls 30 and comprises a pair of lifting levers 34 rotatably carried by the structure 16 about a transversal horizontal axis 36. The axis 36 is shifted downwardly and towards the rear portion of the vehicle with respect to the articulation axis 20 of the boom 18, so that the lifting levers 34 are visible from the control cab 28. In the embodiment shown in figure 3, the lifting levers 34 are fixed to a common tubular element 38 which is rotatably mounted on a pin 40 carried by the vertical walls 30. Linear actuator means are provided for controlling the rotation of the lifting levers 34 about the axis 36. In the embodiment shown in the figures, the actuator means comprise a pair of longitudinally arranged hydraulic cylinders 42 each of which has a front end 44 articulated to the structure 16 and a rear end 46 articulated to a respective lever 48 fixed to said tubular element 38 carrying the lifting levers 34.

As shown in figure 1, the hoisting device 32 is operatively associated with a three-point agricultural hitch comprising, in a way per se known, two lower arms 50 and one central upper arm 52. The lower arms 50 are articulated at lower projecting portions of the vertical walls 30 whereas the upper arm 52 is articulated to a pair of plates 54 projecting from the rear section of the structure 16.

The levers 34 of the hoisting device 32 are connected to the lower arms 50 of the three-point hitch by means of respective rods 56.

The hydraulic cylinders 42 of the hoisting device 32 are fed by a hydraulic unit associated with the internal combustion engine and are operated contemporaneously by means of a hydraulic distributor placed in the control cab. The straight movement of the cylinders 42 produces a rotation of the lifting levers 34 about the transversal axis 36 and such rotation raises or lowers the lower arms 50.

In accordance with a variant of the present invention, the lifting levers 34 can rotate independently from each other about the common axis 36 and can be rotated independently by means of respective linear actuators which can be operated separately from one another. As shown in figure 4, this can be obtained by simply dividing in two parts 38a and 38b the tubular element 38. With respect to the previously disclosed embodiment, this variant differs also in that the two hydraulic cylinders 32 in this case are associated with respective distributors which enable separate operation of the two cylinders 42. With a hoisting device of this type, the operator has the possibility of either rotating the carried implements or placing the implement in an inclined position with respect to a vertical plane.

A particularly advantageous feature of the present invention is that the hoisting device 32 is visible from the operator which occupies the cab 28, which simplifies considerably the task of the operator during the operation of the hoisting device 32.

Preferably, the vehicle according to the invention is also provided with a power take-off (not shown) which could be operated by means of a mechanical transmission, as disclosed in the Italian patent application No. TO98A000268.

## Claims

1. A hoisting vehicle (10) comprising:
- a load-carrying structure (16) having a pair of front wheels (12) and a pair of rear wheels (14),
- a lifting boom (18) having an end articulated to a rear section of the load-carrying structure (16) about a transversal horizontal axis (20),
- a driving and control cab (28) adjacent to the lifting boom,
- actuator means (26) for controlling the oscillation of the lifting boom about said transversal axis (20) between a lowered position, in which said lifting boom (18) extends substantially parallel to the longitudinal axis of the load-carrying structure (16), and a raised position, and
- hoisting means (32) for agricultural implements, arranged in the rear section of the load-carrying structure (16),
**characterized in that** said hoisting means (32) comprise at least one linear actuator (42) articulated to the load-carrying structure (16) and arranged so as to control the rotation of a pair of lifting levers (34) rotatably carried by the load-carrying structure (16) about a horizontal axis (36), the rear section of the load-carrying structure comprising a pair of vertical walls (30) carrying both an articulation pin (22) constituting the transversal axis (20) of the lifting boom (18) and the means (38,40) constituting the axis of rotation (36) of said lifting levers (34).

2. A vehicle according to claim 1, **characterized in that** said lifting levers (34) are rigidly connected to a common rotatable element (38).

3. A vehicle according to claim 2, **characterized in that** it comprises a pair of linear actuators (42) articulated to respective levers (34) fixed to said common rotatable element (38).

4. A vehicle according to claim 1, **characterized in that** said lifting levers (34) are rotatable about a common axis (36) independently from each other and are associated with respective linear actuators (42) which are operable independently from each other.

5. A vehicle according to claim 1, **characterized in that** said lateral walls (30) have respective downwardly projecting portions to which a pair of lower arms (50) of a three-point hitch are articulated.

## Patentansprüche

1. Ein Hubwagen (10), der folgendes umfaßt:
- eine lasttragende Struktur (16) mit einem Paar Vorderrädern (12) und einen Paar Hinterrädern (14),
- einen Hubausleger (18), dessen Ende um eine horizontale Querachse (20) an den hinteren Teil der lasttragenden Struktur (16) angelenkt ist,
- eine Fahr- und Steuerkabine (28), die an den Hubausleger angrenzt,
- Antriebselemente (26) für die Kontrolle der Schwingung des Hubauslegers um die genannte Querachse (20) zwischen einer heruntergefahrenen Stellung, in der der genannte Hubausleger (18) sich im wesentlichen parallel zu der Längsachse der lasttragenden Struktur erstreckt, und einer heraufgefahrenen Stellung, sowie
- Hubmittel (32) für landwirtschaftliche Geräte, die im hinteren Teil der lasttragenden Struktur (16) angeordnet sind,
**dadurch gekennzeichnet, daß** die genannten Hubmittel (32) mindestens einen linearen Antrieb (42) umfassen, der an die lasttragende Struktur (16) angelenkt und so angeordnet ist, daß er die Umdrehung eines Hebearmpaars (34) steuert, das drehbar durch die lasttragende Struktur (16) um eine horizontale Achse (36) geführt wird, wobei der hintere Teil der lasttragenden Struktur ein Paar vertikale Wände (39) umfaßt, die beide einen Gelenkzapfen (22) tragen, der die Querachse (20) des Hubauslegers (18) bildet, sowie die Mittel (38, 40) , die die Drehachse (36) der genannten Hebearme (34) bilden.

2. Ein Hubwagen gemäß Anspruch 1, **dadurch gekennzeichnet, daß** die genannten Hebearme (34) starr mit einem gemeinsamen Drehelement (38) verbunden sind.

3. Ein Hubwagen gemäß Anspruch 2, **dadurch gekennzeichnet, daß** er ein Paar linearer Antriebe (42) umfaßt, die an die jeweiligen Hebearme (34) angelenkt sind, die an dem genannten gemeinsamen Drehelement (38) befestigt sind.

4. Ein Hubwagen gemäß Anspruch 1, **dadurch gekennzeichnet, daß** die genannten Hebearme (34) unabhängig voneinander um eine gemeinsame Achse (36) gedreht werden können und mit den jeweiligen linearen Antrieben (42) verbunden sind, die unabhängig voneinander bedient werden können.

5. Ein Hubwagen gemäß Anspruch 1, **dadurch gekennzeichnet, daß** die genannten Seitenwände (30) jeweils nach unten gerichtete Abschnitte aufweisen, an denen ein Paar untere Arme (50) einer Dreipunkt-Anhängestelle angelenkt sind.

## Revendications

1. Un engin de levage (10) comprenant :
- une structure porteuse (16) avec deux roues avant (12) et deux roues arrière (14),
- une flèche de levage (18) dont une extrémité est articulée à l'arrière de la structure porteuse (16) autour d'un axe horizontal transversal (20),
- une cabine de conduite et de contrôle (28) attenant à la flèche de levage,
- des dispositifs d'actionnement (26) pour le contrôle de l'oscillation de la flèche de levage autour de l'axe transversal (20) entre une position basse, avec la flèche de levage (18) qui s'étend essentiellement de façon parallèle à l'axe longitudinal de la structure porteuse (16), et une position haute, et
- des dispositifs de levage (32) pour des équipements agricoles positionnés à l'arrière de la structure porteuse (16),
**caractérisé en ce que** ces dispositifs de levage (32) comprennent au moins un actionneur linéaire (42) articulé à la structure porteuse (16) et positionné de manière à contrôler la rotation de deux leviers de levage (34) soutenus en rotation par la structure porteuse (16) autour d'un axe horizontal (36), l'arrière de la structure porteuse comprenant deux cloisons verticales (30) supportant chacune un axe articulé (22) constituant l'axe transversal (20) de la flèche de levage (18) et les dispositifs (38, 40) constituant les axes de rotation (36) de ces leviers de levage (34).

2. Un engin selon la revendication 1, **caractérisé en ce que** les leviers de levage (34) sont solidaires d'un élément de rotation commun (38).

3. Un engin selon la revendication 2, **caractérisé en ce qu'**il comprend deux actionneurs linéaires (42) articulés chacun à un levier (34) fixé à l'élément de rotation commun (38).

4. Un engin selon la revendication 1, **caractérisé en ce que** les leviers de levage (34) tournent autour d'un axe commun (36) indépendamment l'un de l'autre et qu'ils sont associés à leurs actionneurs linéaires (42) respectifs qui agissent de façon indépendante.

5. Un engin selon la revendication 1, **caractérisé en ce que** les cloisons latérales (30) ont chacune un prolongement vers le bas sur lequel sont articulés les deux bras inférieurs (50) d'un support d'attelage en trois points.
